# FASCICULE DE BREVET EUROPEEN

(11) **EP 4 115 051 B1**
(45) Date de publication et mention de la délivrance du brevet: **24.04.2024**
(21) Numéro de dépôt: 21722274.4
(22) Date de dépôt: 01.04.2021
(51) Int. Cl.: F01D 5/14, F01D 5/28, F04D 29/02, F04D 29/32, F04D 29/54

(54) **AUBE COMPOSÉE DE PLUSIEURS MATÉRIAUX**
SCHAUFEL AUS MEHREREN MATERIALIEN
BLADE MADE OF MULTIPLE MATERIALS

(30) Priorité: 09.04.2020 FR 2003604
(43) Date de publication de la demande: 11.01.2023
(73) Titulaire: SAFRAN AIRCRAFT ENGINES, 75015 Paris (FR)
(72) Inventeur: ONFRAY, Rémi, Philippe, Guy, 77550 MOISSY-CRAMAYEL (FR); BANTWELL, Dorian, Alexandre, Alban, 77550 MOISSY-CRAMAYEL (FR); LEJEUNE, Alix, Thomas, Bernard, 77550 MOISSY-CRAMAYEL (FR)
(74) Mandataire: Brevalex
(86) Numéro de dépôt international: PCT/FR2021/050573
(87) Numéro de publication internationale: WO 2021/205098

(56) Documents cités:
- EP-A1- 0 764 763
- EP-A2- 1 980 714
- DE-A1-102013 219 772
- FR-A1- 3 012 515
- US-A- 3 294 366
- US-A1- 2016 258 303
- US-B1- 7 963 745

## Description

Le sujet de l'invention est une aube composée de plusieurs matériaux.

La recherche constante d'allégement des turbomachines dans l'aéronautique s'est étendue aussi aux aubes. On a déjà proposé diverses conceptions d'aubes creuses, mais leur emploi n'est pas toujours possible. Une autre façon d'alléger les aubes consiste alors à utiliser des matériaux plus légers, tels que les matériaux composites ; mais ce procédé comporte aussi des limites, puisque les matériaux légers n'ont en général pas la résistance souhaitée pour les parties les plus chargées des aubes, comme les bords d'attaque exposés aux chocs et à l'usure dus à des impuretés solides entraînées avec les gaz ; ils ne permettent d'ailleurs en général pas de façonner avec une finesse suffisante ces bords d'attaque ainsi que les bords de fuite.

Il a alors été proposé (ceci est le sujet du document FR 3035679 A, entre autres) de renforcer une aube massive, construite en un matériau léger, par un renfort composé d'une feuille fine de clinquant en un matériau résistant, qui est pliée pour couvrir le matériau principal sur une petite bande de la face d'intrados et de la face d'extrados. Des aubes à la fois légères et suffisamment résistantes en service sont alors obtenues. Ces renforts locaux ont toutefois aussi certains inconvénients : la mise en forme du clinquant est d'abord difficile, à cause du manque de rigidité de cette pièce fine et élancée, et qu'il faut façonner à une forme compliquée et irrégulière, les bords des aubes récentes ayant souvent des inclinaisons dans le sens axial et le sens tangentiel (dites angles de flèche et de dièdre) importantes et fortement variables ; et même construits avec une feuille de clinquant très fine, les renforts donnent des plis trop épais et arrondis pour construire des bords d'aube assez fins et aigus.

Une construction améliorée d'aube, mais que l'invention perfectionne, est aussi exposée dans US 3 294 366 A.

EP 1 980 714 A2 divulgue un autre exemple d'aube renforcée.

Une autre construction est proposée d'après l'invention. Celle-ci comporte, selon une définition générale, une aube comprenant un bord d'attaque renforcé, un bord de fuite, et s'étendant entre le bord d'attaque et le bord de fuite en étant limitée par une face d'intrados et une face d'extrados qui sont deux faces aérodynamiques principales de l'aube, opposées dans une direction d'épaisseur de l'aube et s'étendant chacune du bord d'attaque au bord de fuite ; l'aube étant formée d'une première partie, monobloc en un premier matériau, composée d'une première portion d'extrémité comprenant le bord d'attaque, d'une seconde portion d'extrémité comprenant le bord de fuite et d'une âme liant la première portion d'extrémité à la seconde portion d'extrémité, la première portion d'extrémité et la seconde portion d'extrémité comprenant chacune une bande de chacune des faces aérodynamiques principales; d'une seconde partie, s'étendant entre la première portion d'extrémité et la seconde portion d'extrémité et jointe à une face principale de l'âme, en un second matériau plus léger que le premier matériau, et portant une zone d'une première des faces aérodynamiques principales entre les bandes de ladite première face aérodynamique appartenant à chacune des portions d'extrémité ; et d'une troisième partie, qui est, comme la seconde partie, en un matériau plus léger que le premier matériau, et qui porte une zone de la seconde des faces aérodynamiques principales entre les bandes de ladite seconde face aérodynamique qui appartiennent aux portions d'extrémité de la première partie ; caractérisée en ce que l'âme a, sur au moins une partie de hauteur de l'aube, une extension oblique dans la direction d'épaisseur, ce qui fait que la seconde partie aura une épaisseur plus grande près de la seconde portion d'extrémité que près de la première portion d'extrémité, et la troisième partie une épaisseur plus grande près de la première portion d'extrémité que près de la seconde portion d'extrémité.

Les bords d'attaque et de fuite sont construits sous forme de parties rigides de la face d'intrados et de la face d'extrados sur au moins la plus grande partie de leur extension, au lieu d'être formés de feuilles de clinquant recourbées. On obtient à la fois une plus grande facilité de fabrication des bords d'attaque et de fuite grâce à la rigidité de ces portions d'extrémités, et la faculté de construire des bords d'attaque et de fuite avec une section aiguë. L'âme assure la cohésion de l'ensemble en reprenant les efforts qui apparaissent dans la pale. Et la seconde partie peut être nettement plus volumineuse que la première, en permettant donc un allégement d'ensemble important. Sa cohésion avec la première partie est bonne, puisqu'elle est disposée dans une cavité formée par celle-ci entre les portions d'extrémité, qui sont saillantes de l'âme dans la direction d'épaisseur de la pale. La résistance mécanique de la seconde partie peut être faible puisque les efforts subis par la pale sont repris par la première : la seconde partie se justifie pour rétablir une surface principale continue, et donc de bonne qualité aérodynamique, de la pale. La troisième partie a les mêmes propriétés que la deuxième.

La deuxième partie et la troisième partie peuvent toutes deux être construites en le second matériau.

La première et la seconde portion d'extrémité sont souvent choisies massives (et plus épaisses que l'âme dans la direction d'épaisseur) pour leur donner une résistance suffisante.

Les considérations de résistance ou de rigidité à l'égard des efforts statiques ou dynamiques, comprenant les vibrations, sont importantes pour la définition précise des paramètres de forme et de dimensions de l'aube, et ici surtout de l'âme et de la première partie. Une idée importante est que les coupes de l'aube prises à des rayons différents diffèrent quant à la position de l'âme, qui peut donc présenter des voilements, c'est-à-dire des inclinaisons uniformes ou non dans la direction angulaire de la turbomachine le long de la direction radiale ; ou des torsions (rotations) autour de la direction radiale, d'une coupe à une autre. Il en résulte certaines constructions particulières, d'après lesquelles :
- dans des coupes prises à travers l'aube, en direction radiale de l'aube et de la face d'intrados à la face d'extrados et sur une partie de hauteur de l'aube, l'une de la deuxième partie et de la troisième partie a une épaisseur croissante dans un sens extérieur de la direction radiale, et l'autre de la deuxième partie et de la troisième partie a une épaisseur décroissante dans ledit sens extérieur ;
- dans une première coupe prise à travers l'aube, adjacente à la première portion d'extrémité, en direction radiale de l'aube et de la face d'intrados à la face d'extrados et sur une partie de hauteur de l'aube, l'une de la deuxième partie et de la troisième partie a une épaisseur croissante dans un sens extérieur de la direction radiale, et l'autre de la deuxième partie et de la troisième partie a une épaisseur décroissante dans ledit sens extérieur; et, dans une seconde coupe prise à travers l'aube, adjacente à la seconde portion d'extrémité, en direction radiale de l'aube et de la face d'intrados à la face d'extrados et sur une partie de hauteur de l'aube, ladite une de la deuxième partie et de la troisième partie a une épaisseur décroissante dans un sens extérieur de la direction radiale, et ladite autre de la deuxième partie et de la troisième partie a une épaisseur croissante dans ledit sens extérieur.

De telles constructions peuvent s'étendre sur toute la hauteur de l'aube dans la direction radiale, ou sur une partie seulement de cette hauteur. Ainsi, selon des constructions avantageuses, ladite partie de hauteur de l'aube a une extension d'au moins 30 % de hauteur ; la hauteur variant de 0 % à une extrémité radialement intérieure de l'aube à 100 % à une extrémité radialement extérieure de l'aube ; ou encore, ladite partie de hauteur de l'aube s'étend entre les hauteurs de 20 % et de 80 % entre ces extrémités.

Selon d'autres possibilités de construction, la deuxième partie et/ou la troisième partie a une épaisseur (au moins sur une partie de hauteur de l'aube) continûment décroissante vers zéro en direction d'une des portions d'extrémité, c'est-à-dire que l'âme peut se raccorder aux portions d'extrémité, ou à l'une d'elles seulement, à l'intrados ou l'extrados.

Selon certaines formes de réalisation envisagées pour l'invention, la première portion d'extrémité et la seconde portion d'extrémité se raccordent à l'âme par des faces postérieures, opposées respectivement au bord d'attaque et au bord de fuite, qui sont essentiellement planes, et l'âme est une plaque rigide délimitée par deux faces principales et opposées qui sont lisses.

L'âme peut encore avoir une épaisseur variable de la première portion d'extrémité à la seconde portion d'extrémité, selon ses propriétés recherchées de résistance.

Le premier matériau sera généralement métallique et choisi pour sa résistance, alors que le second matériau (et celui de la troisième partie, s'il est différent du second matériau) pourra être en matière composite, ou en polymère (résistant aux hautes températures) pour donner l'allégement souhaité. L'assemblage de la seconde partie et de la troisième partie à la première partie sera normalement facile, puisqu'elles sont situées dans une cavité ou des cavités de la première partie, dans lesquelles elles peuvent être moulées ou formées, en produisant une bonne cohésion par adhérence à la première partie.

L'invention sera maintenant décrite dans ses différents aspects, caractéristiques et avantages au moyen des figures suivantes, qui en illustrent certains modes de réalisation donnés à titre purement illustratif :
la figure 1, une vue générale d'aube en perspective ;
la figure 2, une première réalisation de l'invention, en coupe ;
la figure 3, une coupe d'une deuxième réalisation ;
les figures 4A, 4B et 4C, trois coupes successives d'une troisième réalisation ;
les figures 5A, 5B et 5C, trois coupes successives d'une quatrième réalisation ;
la figure 6, une coupe d'une cinquième réalisation ;
la figure 7, une vue en perspective de la quatrième réalisation de l'invention ;
la figure 8, une vue en perspective, à une orientation opposée, de la quatrième revendication ;
la figure 9, une vue d'un détail possible d'aménagement ;
et la figure 10, une autre réalisation d'un tel détail.

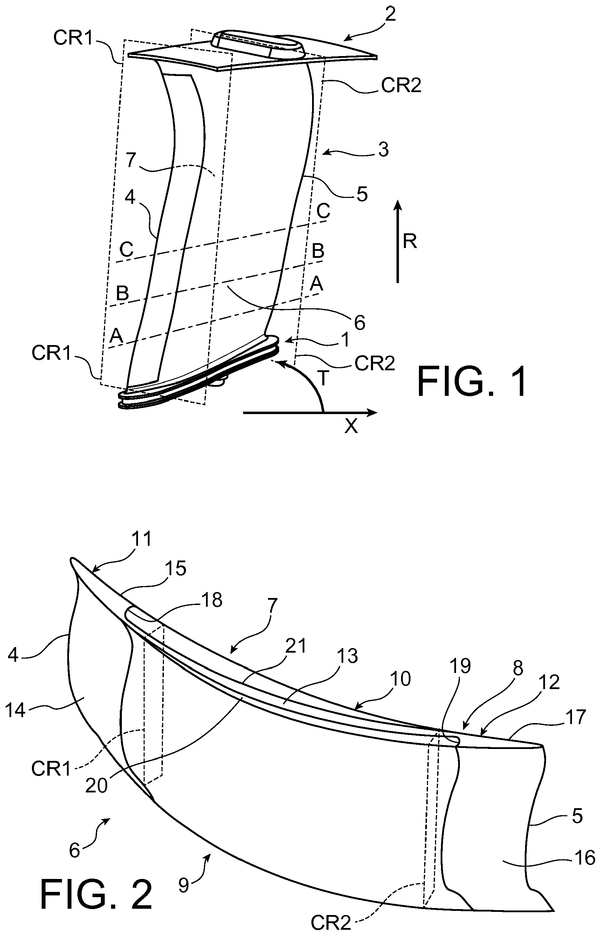

La figure 1 représente une vue générale d'une aube, telle qu'une aube de compresseur, à laquelle l'invention peut être appliquée : l'aube comprend une plateforme intérieure 1 à une extrémité radiale intérieure, une plateforme extérieure 2 à une extrémité radiale extérieure, et une pale 3 joignant les plateformes 1 et 2 et sur laquelle l'invention est implantée. La pale 3 est destinée à s'étendre dans une veine d'écoulement des gaz, où elle peut être exposée à des températures élevées, ainsi qu'à des chocs d'impuretés solides diverses entraînées dans le courant gazeux. Elle comprend un bord d'attaque 4, un bord de fuite 5, et elle est limitée par deux faces aérodynamiques courbes joignant toutes deux le bord d'attaque 4 au bord de fuite 5, dont une face d'extrados 6 et une face d'intrados 7 opposées dans la direction d'épaisseur T de la pale 3. Pour chaque section de la pale 3, à rayon constant dans une direction radiale R, on considérera une direction d'allongement X allant du bord d'attaque 4 au bord de fuite 5, en plus de la direction d'épaisseur T, ces trois directions étant perpendiculaires. On définira aussi un paramètre de hauteur sur l'aube, mesuré de 0 % à la plateforme intérieure 1, à 100 % à la plateforme extérieure 2 dans la direction radiale R.

La figure 2 détaille la structure de la pale 3. Elle est composée d'une première partie 8 et, dans ce mode de réalisation, d'une seconde partie 9 et d'une troisième partie 10. La première partie 8 a un rôle de rigidité structurale et est normalement construite en métal. Elle comporte une première portion d'extrémité 11, une seconde portion d'extrémité 12 et une âme 13 joignant ces portions d'extrémités 11 et 12. La première portion d'extrémité 11 comprend le bord d'attaque 4 et deux bandes 14 et 15 d'extrémité de la face d'extrados 6 de la face d'intrados 7, qui se joignent l'une à l'autre au bord d'attaque 4. La seconde portion d'extrémité 12 comprend le bord de fuite 5 et deux bandes d'extrémités 16 et 17 de la face d'extrados 6 et de la face d'intrados 7, qui se joignent l'une à l'autre au bord de fuite 5. Les bandes 14 et 16, de même que les bandes 15 et 17, occupent cependant une faible portion de largeur des faces d'extrados et d'intrados 6 et 7 (dans la direction d'allongement X). Les portions d'extrémités 11 et 12 sont massives, c'est-à-dire qu'elles ont une section pleine et s'étendent, dans la direction d'épaisseur T de la pale 3, continûment de la bande d'extrémité 14 ou 15 de la face d'extrados 6 à la bande d'extrémité 16 ou 17 de la face d'intrados 7, et qu'elles occupent donc toute l'épaisseur de la pale 3 au bord d'attaque 4 et au bord de fuite 5 et près d'eux (leurs extrémités opposées aux bords d'attaque 4 ou de fuite 5 respectivement peuvent toutefois être raccordées par une face postérieure 18 ou 19 plane ou légèrement concave, ce qu'on a représenté ici).

L'âme 13 est une entretoise qui joint les portions d'extrémités 11 et 12 par leurs faces postérieures 18 et 19. Elle est monobloc avec elles et peut consister en une plaque ou un voile rigide courbe, s'étendant entre deux faces principales 20 et 21 pouvant être lisses ou au contraire raidies. Son épaisseur est ici variable, plus forte au centre que près des portions d'extrémité 11 et 12. Elle est déterminée, avec ou non une évolution ou des variations entre les portions d'extrémité 11 et 12, en fonction de la tenue mécanique statique ou dynamique à obtenir pour l'aube, et qui dépend en effet beaucoup des caractéristiques de l'âme 13. Quoi qu'il en soit, l'épaisseur de l'âme 13 est nettement plus faible que celle des portions d'extrémité 4 et 5, avec la conséquence que l'âme 13 occupe seulement une petite partie du volume de la pale 3 entre ces portions. Des transitions brusques d 'épaisseur entre l'âme 13 et les portions d'extrémité 11 et 12 sont acceptées, et présentes ici.

La seconde partie 9 et la troisième partie 10 s'étendent dans des cavités délimitées par l'âme 13 et les portions d'extrémités 11 et 12, sur des côtés opposés de l'âme 13. La seconde partie 9 est délimitée principalement par la face principale 20 de l'âme 13, la face postérieure 19 de la seconde portion d'extrémité 12 et la bande 14 du côté de l'extrados 6 de la première portion d'extrémité 11. La troisième partie 7 est délimitée par l'autre face principale 21 de l'âme 13, la face postérieure 18 de la première portion d'extrémité 11 et la bande 17 du côté de l'intrados 7 de la seconde portion d'extrémité 12. La seconde partie 9 et la troisième partie 10 portent respectivement la plus grande portion de la surface de l'extrados 6 entre les bandes 14 et 16, et de la surface de l'intrados 7 entre les bandes 15 et 17. Elles sont construites en matériaux plus légers que celui de la première partie 8, par exemple en matériau composite ou en polymère. Elles peuvent être moulées dans les cavités de la première partie 8. La pale 3 est à la fois rigide grâce à la première partie 8, résistante grâce aux portions d'extrémités 11 et 12, et légère grâce au volume important de la seconde partie 9 et de la troisième partie 10. Les zones de l'extrados 6 et de l'intrados 7 qui appartiennent à la seconde partie 9 et à la troisième partie 10 prolongent parfaitement les bandes 14, 15, 16 et 17 et donnent donc une forme continue et régulière à l'extrados 6 et à l'intrados 7, et une bonne qualité aérodynamique à la pale 3. Autrement dit, la seconde partie 9 et la troisième partie 10 s'étendent chacune entre les deux portions d'extrémité 11 et 12 et portent respectivement une portion des faces aérodynamiques d'extrados 6 et d'intrados 7, qui sont positionnées pour assurer la continuité desdites faces d'extrados 6 et d'intrados 7 avec les bandes 14, 15, 16 et 17 et complètent lesdites faces avec lesdites bandes.

D'autres variantes de réalisations seront maintenant décrites.

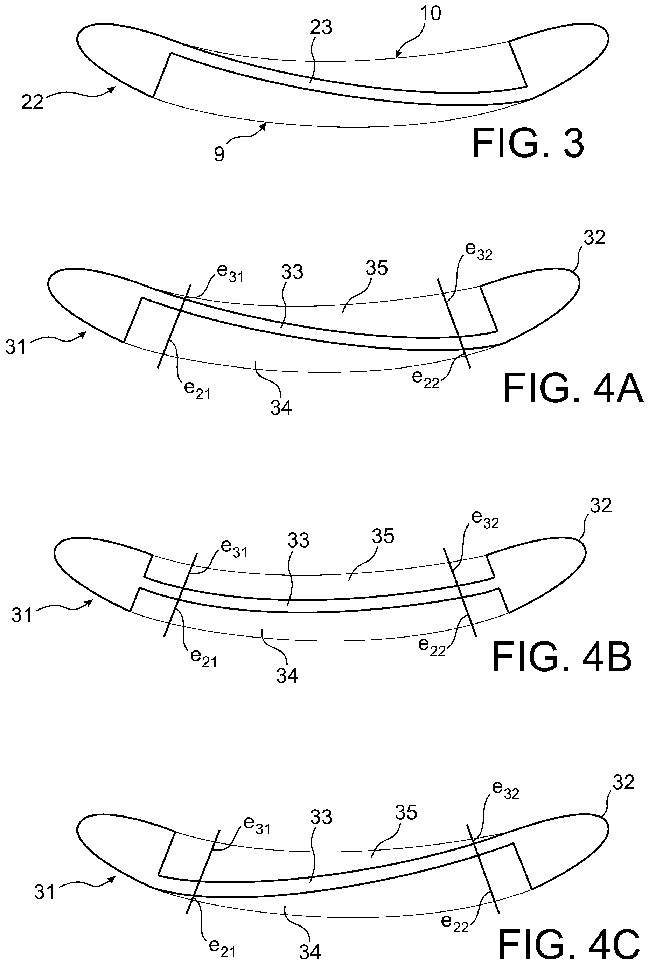

La figure 3 représente une variante de réalisation, qui illustre une âme 23 de la première partie, maintenant 22, dont l'épaisseur est uniforme dans la direction d'allongement X, mais semblable par ailleurs à la réalisation de la figure 2.

Par rapport à des aubes telles que des réalisations de US 3 294 366 A, il est donc proposé ici de rendre l'âme de jonction des portions d'extrémité oblique à travers la dimension d'épaisseur de l'aube, le long de sa dimension de longueur. Cette nouvelle conception permet de renforcer l'aube en la raidissant davantage (il serait possible de renforcer cet effet en procurant à l'âme une forme incurvée en méandres ou des nervures transversales par exemple) et en augmentant la cohésion de la deuxième et de la troisième partie, dont la forme effilée comprend à la fois une portion plus massive à un bout, et une portion plus souple au bout opposé, par rapport à des parties dont l'épaisseur serait à peu près constante. L'épaisseur de l'âme peut être évolutive dans la direction radiale pourtenir compte des efforts aérodynamiques subis par la pièce. L'âme 13 peut avoir une forme évolutive en fonction de la section de la pale considérée. Cela sera décrit plus concrètement au moyen des figures suivantes.

Considérons trois coupes A-A, B-B et C-C, représentées à la figure 1 et prises à trois hauteurs différentes de l'aube dans la direction radiale R, et comparons-les. Dans certaines réalisations de l'invention, représentées aux figures 4A, 4B et 4C, l'âme, maintenant 33, a une forme voilée en torsion, c'est-à-dire que ses sections successives se déduisent les unes des autres par des rotations autour de la direction radiale R, qui la font passer par exemple d'une forme semblable à celle de la figure 3, où elle rejoint la première portion d'extrémité 31 à l'intrados et la seconde portion d'extrémité à l'extrados, à la forme inverse de la figure 4C, où elle rejoint la première portion d'extrémité 31 à l'extrados et la seconde portion d'extrémité 32 à l'intrados ; des formes intermédiaires existent entre ces deux hauteurs, comme le montre la figure 4B d'après laquelle l'âme 33 rejoint les deux portions d'extrémité 31 et 32 à peu près à mi-épaisseur. En d'autres termes, les épaisseurs e₂ et es de la deuxième partie 34 et de la troisième partie 35 de l'aube sont respectivement décroissante et croissante (e₂₁ et e₃₁) le long d'une première coupe radiale de l'aube (CR1-CR1 à la figure 1, prise dans la direction radiale R et la direction d'épaisseur de l'aube adjacente à la première portion d'extrémité 31) dans le sens radial extérieur (vers la plateforme extérieure 2) ; et l'inverse est vrai le long d'une autre coupe radiale (CR2-CR2, adjacente à la seconde portion d'extrémité 32), où les épaisseurs e₂₂ et e₃₂ de la deuxième partie 34 et de la troisième partie 35 sont respectivement croissante et décroissante dans le sens radial extérieur.

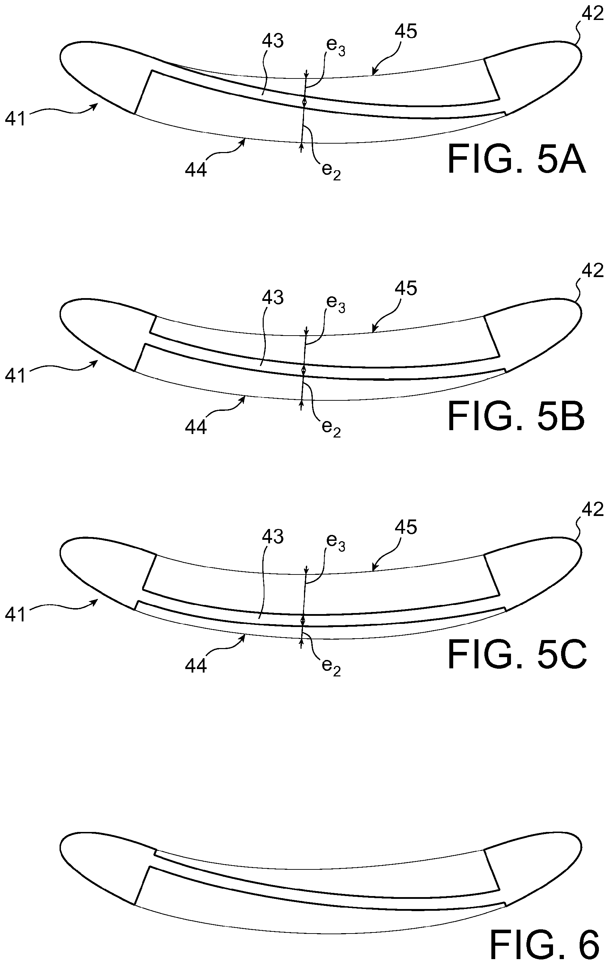

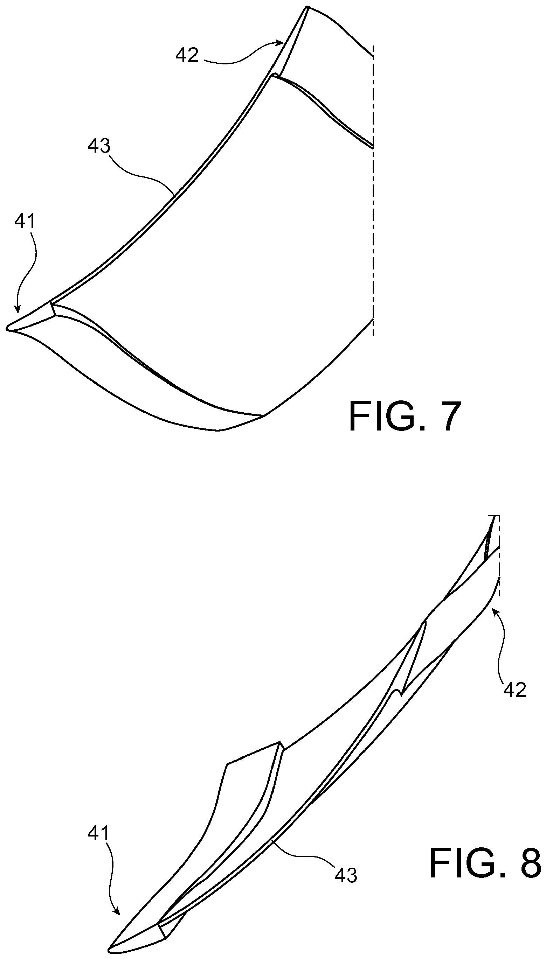

Une autre construction possible est représentée aux figures 5A, 5B et 5C, d'après lesquelles l'âme, maintenant 43, a une forme voilée à inclinaison dans la direction angulaire de la turbomachine, c'est-à-dire que ses sections successives se déduisent les unes des autres principalement par des rotations dans la direction axiale : la direction d'épaisseur de l'aube : l'âme 43 est plus proche de l'intrados à la figure 5A, plus proche de l'extrados à la figure 5B, et encore plus proche de l'extrados à la figure 5C. En d'autres termes, les épaisseurs e₂ de la deuxième partie 44 sont décroissantes dans le sens radial extérieur, et les épaisseurs e₃ de la troisième partie 45 sont croissantes. De plus, cette évolution est irrégulière le long de chaque section de l'âme 43 : la position de l'âme 43 dans la direction d'épaisseur et le long de la hauteur de l'aube varie fortement près de la première portion d'extrémité 41, et faiblement, voire pas du tout, près de la seconde portion d'extrémité 42. Les figures 7 et 8 illustrent plus complètement cette réalisation.

Des évolutions inverses sont envisageables.

De telles constructions de l'âme seront en général choisies pour leur résistance aux efforts statiques ou aérodynamiques, ou leur rigidité aux vibrations, associée aux modes propres de l'aube ; elles seront déterminées par des essais ou des calculs sur modèles.

Des constructions différentes et éventuellement plus complexes que celles qu'on a décrites ici pourront aussi être proposées. C'est ainsi que la forme évolutive pourra concerner seulement une partie de l'âme, une partie complémentaire ayant alors une forme régulière dans la direction radiale R. L'évolution de forme pourra être présente seulement sur une partie de la hauteur de l'aube, par exemple sur une étendue de 30 % de la hauteur totale, ou par exemple encore dans la zone comprise entre les hauteurs de 20 % et 80 % entre les plateformes intérieure 1 et extérieure 2, aux hauteurs de 0 % et 100 %.

Il n'y a pas non plus de règle à propos de l'épaisseur de l'âme, qui peut ou non être variable dans la direction radiale comme dans la direction perpendiculaire, par exemple plus épaisse aux plateformes (ou plus généralement aux extrémités radiales) qu'à mi-hauteur, ou plus épaisse aux raccordements aux portions d'extrémité qu'à mi-longueur entre ces portions.

L'adhérence de la seconde et de la troisième partie à la troisième partie peut être obtenue de diverses façons : par surmoulage, par collage ou par emboîtement de parties proéminentes de la deuxième et de la troisième partie dans des concavités correspondantes de la première partie (par exemple présentes aux faces postérieures 18 et 19, comme on l'a vu).

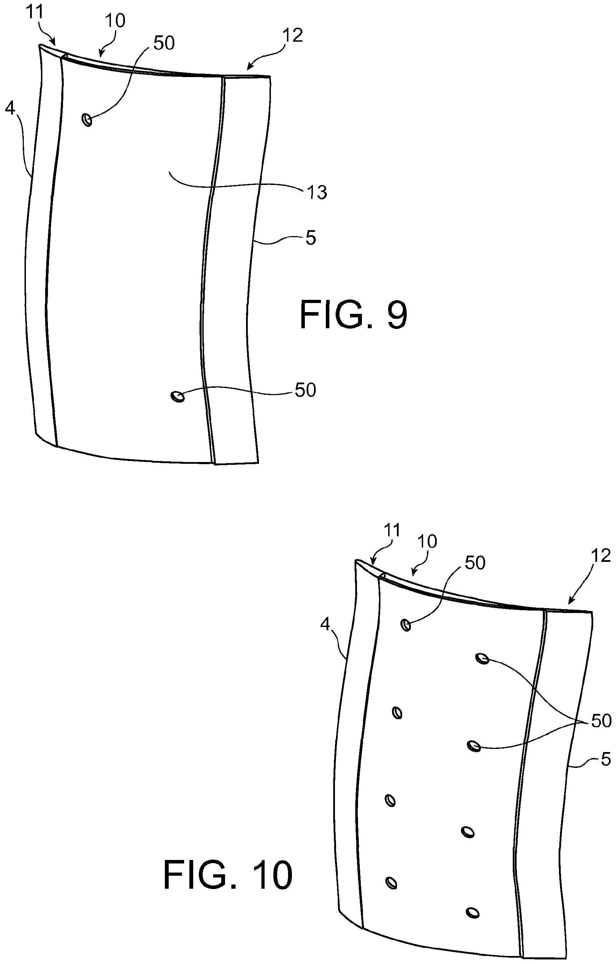

Un mode tout différent pour assurer la cohérence de l'aube consiste à pourvoir l'âme, par exemple l'âme 13, de perçages 50 qui permettent à la seconde partie et à la troisième partie, par exemple 9 et 10, de se joindre directement, leur matière emplissant les perçages 50. Le surmoulage est alors un procédé particulièrement indiqué de fabrication. La figure 9 représente une construction à deux perçages 50 radialement et axialement opposés, et la figure 10 une construction à huit perçages répartis en réseau rectangulaire régulier. Le nombre, la disposition et la largeur des perçages 50 sont choisis en fonction de la cohésion souhaitée ; comme les variations d'épaisseur éventuelles à des endroits moins sollicités mécaniquement, les perçages ont aussi l'effet d'alléger l'âme et donc l'aube. Les figures 9 et 10 reprennent par ailleurs la réalisation de la figure 3, pour laquelle l'âme 13 a des coupes quasiment superposables sur toute la hauteur, rejoignant la première portion d'extrémité 11 à l'extrados 6 et la seconde portion d'extrémité 12 à l'intrados 7, mais des perçages semblables pourraient être opérés dans toutes les autres réalisations envisagées ici.

Enfin, il n'est pas nécessaire que l'âme rejoigne les portions d'extrémité à l'intrados ou à l'extrados : la deuxième partie et la troisième partie peuvent garder une épaisseur non nulle à ces endroits, et à toutes les hauteurs de l'aube, ce qu'on a représenté au moyen de la figure 6.

## Revendications

1. Aube comprenant un bord d'attaque renforcé, un bord de fuite, et s'étendant entre le bord d'attaque et le bord de fuite en étant limitée par une face d'intrados et une face d'extrados qui sont deux faces aérodynamiques principales de l'aube, opposées dans une direction d'épaisseur (T) de l'aube et s'étendant chacune du bord d'attaque au bord de fuite ; l'aube étant formée d'une première partie (8, 22), monobloc en un premier matériau, composée d'une première portion d'extrémité (11) comprenant le bord d'attaque (4), d'une seconde portion d'extrémité (12) comprenant le bord de fuite (5) et d'une âme (13, 23) liant la première portion d'extrémité (11) à la seconde portion d'extrémité (12), la première portion d'extrémité et la seconde portion d'extrémité comprenant chacune une bande (14, 15, 16, 17) de chacune des faces aérodynamiques principales (6, 7) ; d'une seconde partie (9), s'étendant entre la première portion d'extrémité et la seconde portion d'extrémité et jointe à une face principale de l'âme, en un second matériau plus légerque le premier matériau, et portant une zone d'une première des faces aérodynamiques principales (6, 7) entre les bandes de ladite première face aérodynamique appartenant à chacune des portions d'extrémité ; et d'une troisième partie (10, 30), jointe à une seconde face principale, opposée à la première face principale, de l'âme, portant une zone d'une seconde des faces aérodynamiques principales entre les bandes de ladite seconde face aérodynamique appartenant à chacune des portions d'extrémité, et en un matériau plus léger que le premier matériau ; **caractérisée en ce que** l'âme (13) a, sur au moins une partie de hauteur de l'aube, une extension oblique dans la direction d'épaisseur, la seconde partie (9) ayant une épaisseur plus grande près de la seconde portion d'extrémité que près de la première portion d'extrémité, et la troisième partie (10) ayant une épaisseur plus grande près de la première portion d'extrémité que près de la seconde portion d'extrémité.

2. Aube selon la revendication 1, **caractérisée en ce que** la première portion d'extrémité et la seconde portion d'extrémité se raccordent à l'âme par des faces postérieures (18, 19), opposées au bord d'attaque et au bord de fuite, essentiellement planes.

3. Aube selon l'une quelconque des revendications 1 ou 2, **caractérisée en ce que** l'âme (13) est une plaque rigide délimitée par deux faces lisses principales (20, 21) et opposées.

4. Aube selon la revendication 3, **caractérisée en ce que** la plaque a une épaisseur variable entre la première portion d'extrémité et la seconde portion d'extrémité.

5. Aube selon l'une quelconque des revendications précédentes, **caractérisée en ce que** la deuxième partie et la troisième partie sont toutes deux construites en le second matériau.

6. Aube selon l'une quelconque des revendications précédentes, **caractérisée en ce que** le premier matériau est métallique.

7. Aube selon l'une quelconque des revendications précédentes, **caractérisée en ce que** le second matériau et le matériau de la troisième partie sont en composite ou polymère.

8. Aube selon la revendication 7, **caractérisée en ce que** la deuxième partie et la troisième partie sont moulées ou formées dans la première partie.

9. Aube selon l'une quelconque des revendications précédentes, **caractérisée en ce que** la première et la seconde portion d'extrémité (11, 12) sont massives et plus épaisses que l'âme (13) dans ladite direction d'épaisseur.

10. Aube selon l'une quelconque des revendications précédentes, **caractérisée en ce que**, dans des coupes prises à travers l'aube, en direction radiale de l'aube et de la face d'intrados à la face d'extrados et sur une partie de hauteur de l'aube, l'une de la deuxième partie (44) et de la troisième partie (45) a une épaisseur (e₃) croissante dans un sens extérieur de la direction radiale, et l'autre de la deuxième partie et de la troisième partie a une épaisseur (e₂) décroissante dans ledit sens extérieur.

11. Aube selon l'une quelconque des revendications 1 à 9, **caractérisée en ce que**, dans une première coupe prise à travers l'aube, adjacente à la première portion d'extrémité, en direction radiale de l'aube et de la face d'intrados à la face d'extrados et sur une partie de hauteur de l'aube, l'une de la deuxième partie (34) et de la troisième partie (35) a une épaisseur croissante dans un sens extérieur de la direction radiale, et l'autre de la deuxième partie et de la troisième partie a une épaisseur décroissante dans ledit sens extérieur; et, dans une seconde coupe prise à travers l'aube, adjacente à la seconde portion d'extrémité, en direction radiale de l'aube et de la face d'intrados à la face d'extrados et sur une partie de hauteur de l'aube, ladite une de la deuxième partie et de la troisième partie a une épaisseur décroissante dans un sens extérieur de la direction radiale, et ladite autre de la deuxième partie et de la troisième partie a une épaisseur croissante dans ledit sens extérieur.

12. Aube selon l'une quelconque des revendications précédentes, **caractérisée en ce que** la deuxième partie et/ou la troisième partie a une épaisseur, au moins sur une partie de hauteur de l'aube, continûment décroissante vers zéro en direction d'une des portions d'extrémité.

13. Aube selon l'une quelconque des revendications 10 ou 11, **caractérisée en ce que** la partie de hauteur de l'aube a une extension d'au moins 30 % de hauteur ; la hauteur variant de 0 % à une extrémité radialement intérieure de l'aube à 100 % à une extrémité radialement extérieure de l'aube.

14. Aube selon la revendication 13, **caractérisée en ce que** la partie de hauteur de l'aube s'étend entre une hauteur de 20 % et une hauteur de 80 % entre les extrémités radialement intérieure et extérieure de l'aube.

15. Aube selon l'une quelconque des revendications précédentes, **caractérisée en ce qu'**elle comprend des perçages (50) à travers l'âme, par lesquels la seconde partie et la troisième partie se joignent.

## Patentansprüche

1. Schaufel, die eine verstärkte Vorderkante, eine Hinterkante umfasst, und sich zwischen der Vorderkante und der Hinterkante erstreckt, und dabei durch eine Druckseitenfläche und eine Saugseitenfläche begrenzt wird, welche zwei, in einer Dickenrichtung (T) der Schaufel gegenüberliegende aerodynamische Hauptflächen der Schaufel sind, und sich jeweils von der Vorderkante zur Hinterkante erstrecken; wobei die Schaufel aus einem ersten Teil (8, 22), in einem Stück aus einem ersten Werkstoff, gebildet ist, sich aus einem ersten Endabschnitt (11), der die Vorderkante (4) umfasst, aus einem zweiten Endabschnitt (12), der die Hinterkante (5) umfasst, und einem Kern (13, 23) zusammensetzt, der den ersten Endabschnitt (11) mit dem zweiten Endabschnitt (12) verbindet, wobei der erste Endabschnitt und der zweite Endabschnitt jeweils ein Band (14, 15, 16, 17) einer jeden der aerodynamischen Hauptflächen (6, 7) umfassen; aus einem zweiten Teil (9), der sich zwischen dem ersten Endabschnitt und dem zweiten Endabschnitt erstreckt, und an eine Hauptfläche des Kerns anschließt, aus einem zweiten leichteren Werkstoff, als der erste Werkstoff, und der eine Zone einer ersten der aerodynamischen Hauptflächen (6, 7) zwischen den Bändern der ersten aerodynamischen Fläche trägt, die jedem der Endabschnitte angehört; und aus einem dritten Teil (10, 30), der an eine zweite Hauptfläche gegenüber der ersten Hauptfläche des Kerns anschließt, der eine Zone einer zweiten der aerodynamischen Hauptflächen zwischen den Bändern der zweiten aerodynamischen Fläche trägt, die jedem der Endabschnitte angehört, und aus einem leichteren Werkstoff, als der erste Werkstoff; **dadurch gekennzeichnet, dass** der Kern (13) auf mindestens einem Teil einer Höhe der Schaufel eine schräge Erstreckung in der Dickenrichtung aufweist, wobei der zweite Teil (9) eine größere Dicke nahe dem zweiten Endabschnitt als nahe dem ersten Endabschnitt aufweist, und der dritte Teil (10) eine größere Dicke nahe dem ersten Endabschnitt als nahe dem zweite Endabschnitt aufweist.

2. Schaufel nach Anspruch 1, **dadurch gekennzeichnet, dass** der erste Endabschnitt und der zweite Endabschnitt durch hintere Flächen (18, 19), entgegengesetzt zur im Wesentlichen ebenen Vorderkante und zur Hinterkante miteinander verbunden sind.

3. Schaufel nach einem der Ansprüche 1 oder 2, **dadurch gekennzeichnet, dass** der Kern (13) eine starre Platte ist, die durch zwei glatte und entgegengesetzte Hauptflächen (20, 21) begrenzt ist.

4. Schaufel nach Anspruch 3, **dadurch gekennzeichnet, dass** die Platte eine variable Dicke zwischen dem ersten Endabschnitt und dem zweiten Endabschnitt aufweist.

5. Schaufel nach einem der vorstehenden Ansprüche, **dadurch gekennzeichnet, dass** der zweite Teil und der dritte Teil beide aus dem zweiten Werkstoff gefertigt sind.

6. Schaufel nach einem der vorstehenden Ansprüche, **dadurch gekennzeichnet, dass** der erste Werkstoff aus Metall ist.

7. Schaufel nach einem der vorstehenden Ansprüche, **dadurch gekennzeichnet, dass** der zweite Werkstoff und der Werkstoff des dritten Teils aus Verbundstoff oder Polymer sind.

8. Schaufel nach Anspruch 7, **dadurch gekennzeichnet, dass** der zweite Teil und der dritte Teil gegossen oder in dem ersten Teil gebildet werden.

9. Schaufel nach einem der vorstehenden Ansprüche, **dadurch gekennzeichnet, dass** der erste und der zweite Endabschnitt (11, 12) massiv und dicker als der Kern (13) in der Dickenrichtung ist.

10. Schaufel nach einem der vorstehenden Ansprüche, **dadurch gekennzeichnet, dass** in durch die Schaufel hindurch, in der radialen Richtung der Schaufel und von der Druckflächenseite zur Saugflächenseite und auf einem Teil einer Höhe der Schaufel durchgeführten Schnitten einer von dem zweiten Teil (44) und dem dritten Teil (45) eine in einer Außenrichtung der radialen Richtung zunehmende Dicke (e₃) aufweist, und der andere von dem zweiten Teil und dem dritten Teil in der Außenrichtung eine abnehmende Dicke (e₂) aufweist.

11. Schaufel nach einem der Ansprüche 1 bis 9, **dadurch gekennzeichnet, dass** in einem ersten durch die Schaufel hindurch, angrenzend an den ersten Endabschnitt, in radialer Richtung der Schaufel und von der Druckflächenseite zur Saugflächenseite und auf einem Teil einer Höhe der Schaufel durchgeführten Schnitt, einer von dem zweiten Teil (34) und dem dritten Teil (35) eine in einer Außenrichtung der radialen Richtung zunehmende Dicke aufweist, und der andere von dem zweiten Teil und dem dritten Teil in der Außenrichtung eine abnehmende Dicke aufweist; und in einem zweiten durch die Schaufel hindurch, angrenzend an den zweiten Endabschnitt, in radialer Richtung der Schaufel und von der Druckflächenseite zur Saugflächenseite und auf einem Teil einer Höhe der Schaufel durchgeführten Schnitt, der eine von dem zweiten Teil und dem dritten Teil in einer Außenrichtung der radialen Richtung abnehmende Dicke aufweist, und der andere von dem zweiten Teil und dem dritten Teil in der Außenrichtung eine zunehmende Dicke aufweist.

12. Schaufel nach einem der vorstehenden Ansprüche, **dadurch gekennzeichnet, dass** der zweite Teil und/oder der dritte Teil mindestens in einem Teil der Höhe der Schaufel eine durchgehend nach null abnehmende Dicke in Richtung eines der Endabschnitte aufweist.

13. Schaufel nach einem der Ansprüche 10 oder 11, **dadurch gekennzeichnet, dass** der Teil einer Höhe der Schaufel eine Erstreckung von mindestens 30 % der Höhe aufweist; wobei die Höhe von 0 % an einem radial inneren Ende der Schaufel bis 100 % an einem radial äußeren Ende der Schaufel variiert.

14. Schaufel nach Anspruch 13, **dadurch gekennzeichnet, dass** sich der Teil der Höhe der Schaufel zwischen einer Höhe von 20 % und einer Höhe von 80 % zwischen dem radial inneren und äußeren Ende der Schaufel erstreckt.

15. Schaufel nach einem der vorstehenden Ansprüche, **dadurch gekennzeichnet, dass** es Bohrungen (50) durch den Kern hindurch umfasst, durch die hindurch sich der zweite Teil und der dritte Teil aneinanderfügen.

## Claims

1. A blade comprising a reinforced leading edge, a trailing edge, and extending between the leading edge and the trailing edge while being limited by a lower surface face and an upper surface face which are two main aerodynamic faces of the blade, opposite in a direction of the thickness (T) of the blade and each extending from the leading edge to the trailing edge; the blade being formed of a first portion (8, 22), made in one piece of a first material, made of a first end portion (11) comprising the leading edge (4), of a second end portion (12) comprising the trailing edge (5) and of a core (13, 23) connecting the first end portion (11) to the second end portion (12), the first end portion and the second end portion each comprising a strip (14, 15, 16, 17) of each of the main aerodynamic faces (6, 7); of a second portion (9), extending between the first end portion and the second end portion and joined to a main face of the core, made of a second material lighter than the first material, and carrying a zone of a first one of the main aerodynamic faces (6, 7) between the strips of said first aerodynamic face belonging to each of the end portions; and of a third portion (10, 30), joined to a second main face, opposite the first main face, of the core, carrying a zone of a second one of the main aerodynamic faces between the strips of said second aerodynamic face belonging to each of the end portions, and made of a material lighter than the first material; **characterised in that** the core (13) has, over at least a portion of the height of the blade, an oblique extension in the direction of thickness, the second portion (9) having a greater thickness near the second end portion than near the first end portion, and the third portion (10) having a greater thickness near the first end portion than near the second end portion.

2. The blade according to claim 1, **characterised in that** the first end portion and the second end portion are connected to the core by rear faces (18, 19), opposite the leading edge and the trailing edge, which are essentially planar.

3. The blade according to any one of claims 1 or 2, **characterised in that** the core (13) is a rigid plate delimited by two main and opposite smooth faces (20, 21).

4. The blade according to claim 3, **characterised in that** the plate has a variable thickness between the first end portion and the second end portion.

5. The blade according to any one of the preceding claims, **characterised in that** the second portion and the third portion are both constructed from the second material.

6. The blade according to any one of the preceding claims, **characterised in that** the first material is metallic.

7. The blade according to any one of the preceding claims, **characterised in that** the second material and the material of the third portion are made of composite or polymer.

8. The blade according to claim 7, **characterised in that** the second portion and the third portion are moulded or formed in the first portion.

9. The blade according to any one of the preceding claims, **characterised in that** the first and the second end portion (11, 12) are solid and thicker than the core (13) in said direction of thickness.

10. The blade according to any one of the preceding claims, **characterised in that**, in sections taken through the blade, in the radial direction of the blade and from the lower surface face to the upper surface face and over a portion of the height of the blade, one of the second portion (44) and the third portion (45) has an increasing thickness (e₃) in an outward direction of the radial direction, and the other of the second portion and the third portion has a decreasing thickness (e2) in said outward direction.

11. The blade according to any one of claims 1 to 9, **characterised in that**, in a first section taken through the blade, adjacent to the first end portion, in the radial direction of the blade and from the lower surface face to the upper surface face and over a portion of the height of the blade, one of the second portion (34) and the third portion (35) has an increasing thickness in an outward direction of the radial direction, and the other of the second portion and the third portion has a decreasing thickness in said outward direction; and, in a second section taken through the blade, adjacent to the second end portion, in the radial direction of the blade and from the lower surface face to the upper surface face and over a portion of the height of the blade, said one of the second portion and the third portion has a decreasing thickness in an outward direction of the radial direction, and said other of the second portion and the third portion has an increasing thickness in said outward direction.

12. The blade according to any one of the preceding claims, **characterised in that** the second portion and/or the third portion has a thickness, at least over a portion of the height of the blade, continuously decreasing towards zero in the direction of one of the end portions.

13. The blade according to any one of claims 10 or 11, **characterised in that** the height portion of the blade has an extension of at least 30% in height; the height varying from 0% at a radially inner end of the blade to 100% at a radially outer end of the blade.

14. The blade according to claim 13, **characterised in that** the height portion of the blade extends between a height of 20% and a height of 80% between the radially inner and outer ends of the blade.

15. The blade according to any one of the preceding claims, **characterised in that** it comprises bores (50) through the core, through which the second portion and the third portion are joined.
